# EUROPEAN PATENT SPECIFICATION

(11) **EP 0 509 093 B1**
(45) Date of publication and mention of the grant of the patent: **14.08.1996**
(21) Application number: 90916056.6
(22) Date of filing: 02.11.1990
(51) Int. Cl.: B29D 30/32, B29D 30/36

(54) **METHOD OF AND APPARATUS FOR BUILDING GREEN TIRE**
VERFAHREN UND VORRICHTUNG ZUM AUFBAUEN VON ROHREIFEN
PROCEDE ET APPAREIL DE PRODUCTION DE PNEUS CRUS

(43) Date of publication of application: 21.10.1992
(73) Proprietor: Sumitomo Rubber Industries Ltd., Kobe-shi, Hyogo-ken (JP)
(72) Inventor: SATO, Kazuo, 1, Izumi-House 2-15, Kamo 1-chome, Osaka-fu 592 (JP); KONDO, Kazuaki, 99, Gaiden Takemotocho, Aichi-ken 473 (JP)
(74) Representative: Stewart, Charles Geoffrey
(86) International application number: PCT/JP90/01429
(87) International publication number: WO 92/07709

(56) References cited:
- EP-A-00 081 858
- JP-A-01 198 334
- JP-A-50 134 083
- JP-A-57 116 630
- US-A-03 434 897
- US-A-03 867 230

## Description

### BACKGROUND OF THE INVENTION

The present invention relates to a process and an apparatus for building a green tyre in the production process of a radial tyre.

There has been conventionally adopted the following process to build such a green tyre:-

Firstly, a tyre carcass is wound onto a tyre shaping former, which has right and left shoulder formers, and formed into a cylindrical shape. Then, beads are set at specified positions on the tyre carcass. Bead locking means provided in the respective shoulder formers are expanded radially of the shaping former so that the beads are locked on the tyre carcass. Subsequently, while shaping air pressure is supplied to inflate the tyre carcass, the left and right shoulder formers are moved closer to each other by driving means to reduce the distance between the beads. In this way, the tyre carcass is shaped into a toroidal form. Thereafter, opposite side portions of the tyre carcass are turned up around their respective beads. Subsequently a breaker and a tread are applied onto the outer circumferential surface of the toroidal tyre carcass, whereby a green tyre is completely built.

For carrying out the above process, there has been known an apparatus which comprises a rotatable and axially movable main shaft supported by a housing and a countershaft (sleeve) around the main shaft. The countershaft is rotatable together with the main shaft and movable in an axial direction thereof. The apparatus also comprises left and right shoulder formers fixed to the forward ends of the main shaft and the countershaft, each shoulder former being provided with a radially expandable bead locking means and inflatable ply turn-up means. A pair of ladder-like arranged screw shafts, or angular screw shafts, or ball screws, each having a left-handed threaded portion and a right-handed threaded portion, are rotatably supported by the shoulder formers parallel to the main shaft. A member provided with holes having internal right-hand screw threads on opposite sides thereof are connected to these screw shafts and the countershaft in the following fashion. The holes of the member are spirally fitted to the right-hand threaded portions of the respective threaded shafts. A centre portion of the member is so connected to a rearward end of the countershaft as to render the countershaft rotatable and slidable. On the other hand, a member provided with holes having internal left-hand threaded threads on opposite sides thereof are connected to these threaded shafts and the main shaft in the following fashion. The holes of the member are spirally fitted to the left-hand threaded portions of the respective threaded shafts. A centre portion of the member is so connected to a rearward end of the main shaft as to render the main shaft rotatable and slidable. The shafts are coupled to a motor. By reciprocatingly rotating the shafts by the motor, the main shaft and the countershaft can be moved in the axial direction thereof relative to each other. Accordingly, the shoulder formers fixed respectively to the main shaft and the countershaft can be moved closer to or away from each other. In other words, in this apparatus, the driving force of a drive source, such as a motor, is transmitted respectively to the main shaft and the countershaft through a desired driving force transmission mechanism, whereby the main shaft and the countershaft are moved closer to or away from each other.

However, in the above process and apparatus, the left and the right shoulder formers are coupled to the driving mechanism through the main shaft or the countershaft respectively. Unless driven by the driving mechanism, the shoulder formers are in almost completely fixed states. Accordingly, the following problems occur.

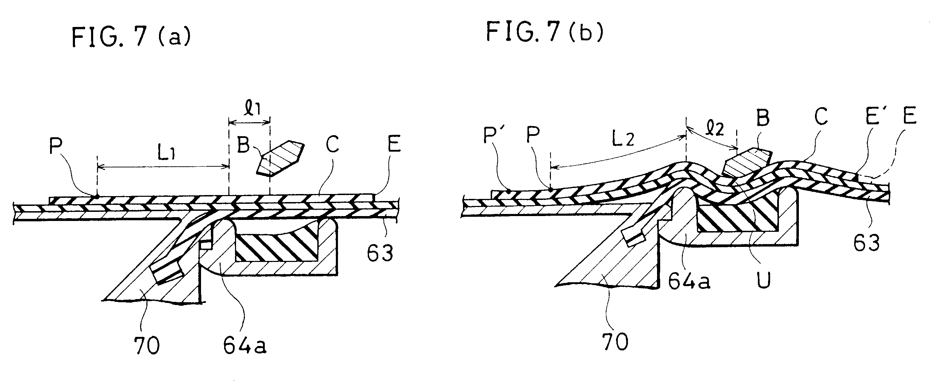

Figure 7 (a) shows the position where a carcass ply C is over-hanging mounted on a turn-up bladder (ply turning up bladder) 63. In this state, left and right shoulder formers on which the carcass ply C is wound (only one of the shoulder formers 70 is shown in Figure 7(a) are fixed, and therefore the distance between the two shoulder formers is unchangeable.

In the above state, when a bead locking segment 64a is radially expanded, pushing the carcass ply C outward, a portion of the carcass ply C is lifted from a starting point. Accordingly, the cords of the carcass ply C are elongated by their distance obtained by subtracting a length (L1 + ℓ1) from another length (L2 + ℓ2). This elongation of the cords is compensated for by displacement of the edge of the ply from position E to position E'. Alternatively, the elongation of the cords can be compensated for by displacement of point P' shown in Figure 7 (b) to the point P. These two types of displacement of the cords both occur at different ratios around the assembly. This causes the lengths of the cords of the carcass ply between the beads to become variable, adversely affecting uniformity of the tyre.

Further, by displacing the edge of the ply from position E to position E', the angles of cords constituting bead reinforcing layer with respect to the lengthwise direction of the bead reinforcing layer are made greater. This in turn causes the angles of the carcass ply cords with respect to the circumferential direction of the carcass ply to become greater, again adversely affecting the tyre uniformity. Moreover, by displacing the edge of the ply from the position E to the position E', great tension is exerted onto the carcass ply cords, thereby reducing the amount of topping rubber in the portion U of the carcass ply C right under the bead B. In this state, the bead and the ply cords are liable to be abraded one against another.

Furthermore, in the above process and apparatus, when the left and the right shoulder formers are moved closer to each other in the carcass shaking operation, it is extremely difficult to start driving the left and the right shoulder perfectly in synchronism with the start of the supply of the shaping air. If driving of the shoulder formers is started later than the start of the supply of the shaping air, the carcass ply C excessively tensioned by the shaping air. This causes the bead on the carcass ply c to dislocate from its set position. Accordingly, there is a likelihood that the lengths of the turned up ply and the distances between the beads become variable around the carcass circumference. On the contrary, if movement of the shoulder formers is started earlier than the start of the supply of the shaping air, such problems occur as flapping of the carcass ply during the carcass shaping operation.

### DISCLOSURE OF THE INVENTION

In order to solve the foregoing drawbacks, the present invention is as follows:-

A process for building a green tyre on a green tyre building means including left and right shoulder formers arranged in an axial direction for supporting a cylindrical carcass, the shoulder formers each being provided with a bead locking means and being forcibly movable in the axial direction by a driving means, the method comprising forming a cylindrical carcass on the green tyre building means, setting left and right bead rings at specified positions radially outside the respective bead locking means of the left and right shoulder formers, actuating the bead locking means to lock the bead rings on the specified positions of the cylindrical carcass, actuating the driving means to forcibly move the left and right shoulder formers towards each other in shaping of the cylindrical carcass into a toroidal form, turning up opposite side portions of the carcass around the respective bead rings, and adhering a breaker/tread assembly onto an outer circumferential surface of the carcass, the method being characterised by selectively setting the driving means in an idle state so that the left and right shoulder formers are freely movable towards each other in response to additional tension of the carcass caused when the bead locking means is actuated to lock the bead rings.

According to the above process, the left and the right shoulder formers are brought into the respective idle or movable states when the bead are to be locked. Thereby, the left and the right shoulder formers are moved spontaneously toward each other by a small amount on radial expansion of the bead locking means. This slightly narrows the distance between the beads. Accordingly, no unnaturally strong force is exerted on the carcass cords.

Further, according to a second aspect the left and the right shoulder formers may be kept in their respective idle or movable states from the start of the bead locking operation to a predetermined stage of the carcass shaping operation by keeping a clutch of drive means for driving the shoulder formers in a disengaged state. Thereby, providing better effect.

More specifically, by the above process, when the carcass shaping process begins by radially inflating the pressure shaping air bag the left and the right shoulder formers synchronously start moving towards each other in a natural manner. Thereafter, the shoulder formers move closer to each other only due to the inflation of the carcass. After the predetermined stage of the carcass shaping operation, e.g. an intermediate stage thereof or a stage where the carcass is shaped onto a substantially semicircular form, the clutch is engaged so as to drivingly move the shoulder formers towards each other in accordance with the desired form of the carcass. Consequently, the beads are moved to respective specified final positions, and the carcass is shaped into a toroidal form, completing the carcass shaping operation. Thereafter, opposite side portions of the carcass outside the respective beads are turned up around the beads, and tyre components such as a breaker and a tread are adhered onto the carcass. In this way, a green tyre is built.

The present invention also provides an apparatus to carry out the above processes. The apparatus comprises a housing, a main shaft having a forward end and one side rotatably supported by the housing, a countershaft disposed coaxially with the main shaft, the countershaft being movable relative to the main shaft in an axial direction of the main shaft and rotatable integrally with the main shaft, left and right shoulder formers mounted respectively on the forward end of the main shaft and the countershaft, each of the shoulder formers having radially expandable bead locking means, drive means for moving the main shaft and the countershaft relative to each other in the axial direction thereof, the apparatus being characterised in that the drive means has a driving state of moving the main shaft and the countershaft in axial directions so that the left and right shoulder formers forcibly move to or away from each other and a suspending state of allowing the countershaft to freely move relative to the main shaft so that the left and right shoulder formers move to each other due to additional tension of the carcass caused by the radially expandable bead locking means, and switch means for changing an operative state thereof from a driving force transmissible state where the driving force of the drive means is allowed to be transmitted to the main shaft and the countershaft to an idle state where the main shaft and the countershaft are allowed to move freely, or vice versa.

With the above construction, by changing the operative state of the switch means to the driving force transmissible state, the left and the right shoulder formers can be driven in the axial direction thereof by the driving force from the drive means. In addition, by changing the operative state of the switch means to the idle state, the left and the right shoulder formers can be kept in respective idle or movable states during the bead locking operation and/or from the state of the carcass shaping operation to the predetermined stage thereof. By changing the operative state of the switch means in the appropriate manner, the aforementioned process can be carried out most effectively.

### BRIEF DESCRIPTION OF THE DRAWINGS

Figure 1 is a sectional side elevation showing a green tyre building apparatus embodying the invention;
Figure 2 is a diagram showing the building apparatus viewed in the direction of arrow II in Figure 1;
Figure 3 is a sectional plan view showing the construction around the main shaft of the building apparatus;
Figure 4 is a sectional plan view showing the driving section of the building apparatus;
Figure 5 is a sectional side elevation showing a green tyre shaping section of the building apparatus;
Figure 6 is a perspective view showing various air passages provided in the building apparatus;
Figures 7(a),7(b) are sectional views respectively showing problems when a bead is to be locked in a green tyre building apparatus of the prior art; and
Figure 8 is a sectional plan view showing a modified driving section in a green tyre building apparatus embodying the invention.

### BEST MODE FOR CARRYING OUT THE INVENTION

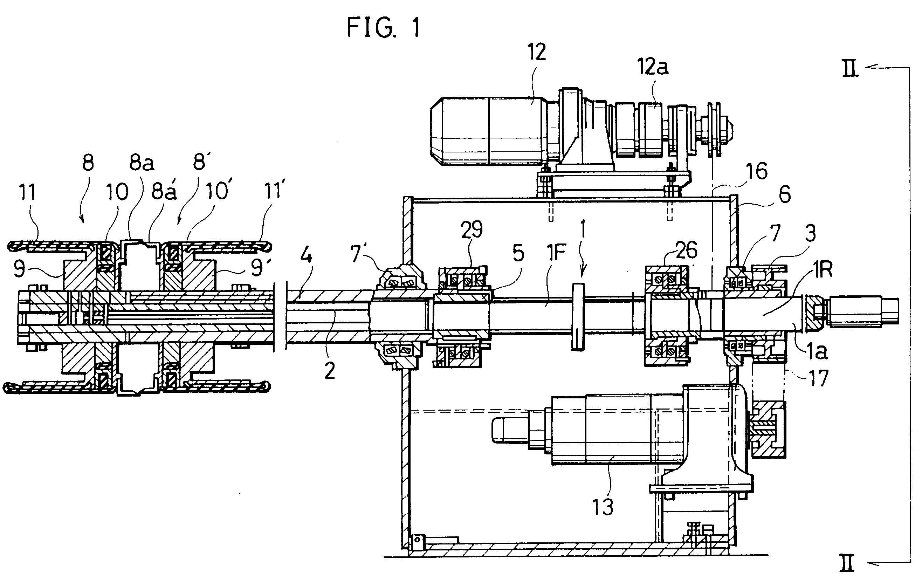

An embodiment of the present invention will be described with reference to Figures 1 to 5.

The green tyre building apparatus shown in the figures broadly comprises a driving section shown in the right side of Figures 1, 3 and Figure 4, and a green tyre shaping section shown in the left side of Figures 1, 3 and Figure 5.

The driving section is provided with a housing 6 in which one end of a main shaft 1 and a countershaft (sleeve) 4 are rotatably supported.

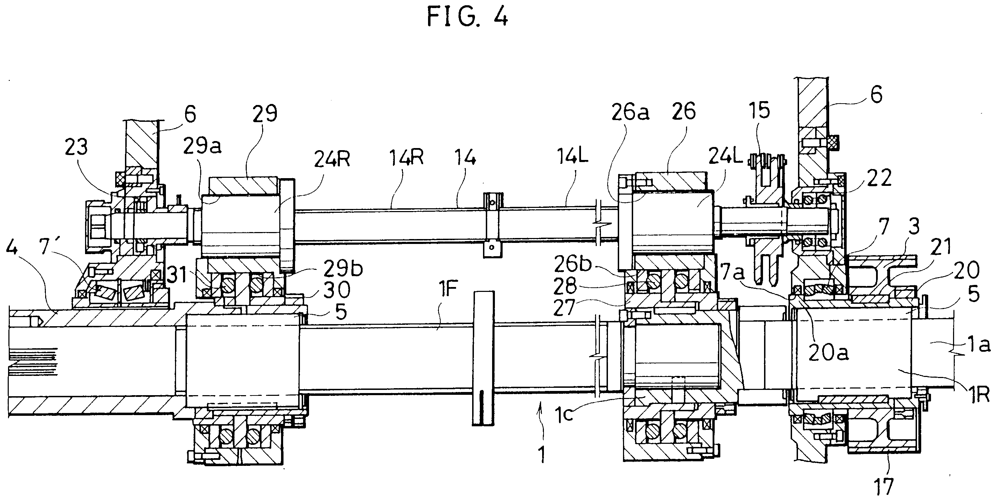

Specifically, the main shaft 1 comprises a forward main shaft IF and a rearward main shaft 1R. The forward main shaft IF and the rearward shaft IR are connected to each other at a junction portion 1c see Figure 4. A rear end of the main shaft 1 (the right end in Figure 4) is a splined shaft 1a. The countershaft 4 is externally fitted to the forward main shaft IF by way of a ball spline 5.

The countershaft 4 is movable in the axial direction relative to the main shaft 1, and rotatable together therewith. A roller bearing 7' is fixedly provided in a front side wall of the housing 6 (the left side wall thereof in Figure 1). The countershaft 4 is arranged to be not only rotatable but also slidable in the axial direction by being supported by a bearing having a small frictional resistance provided on an inner circumferential surface of the radial roller bearing 7'. More particularly, the countershaft 4 is capable of sliding freely and smoothly under even a weak force applied in the axial direction.

A boss 20 internally provided with a ball spline 5 is externally fitted to the splined shaft 1a of the main shaft 1. The boss 20 has a jaw 20a formed on an end portion thereof (the left end portion in Figure 4). A radial roller bearing 7 is fixedly provided in a rear side wall of the housing 6. The boss 20 is internally fitted to the radial roller bearing 7. On the radial roller bearing 7 is formed a groove 7a, which is in engagement with the jaw 20a. With this construction as described above, the main shaft 1 is supported by the housing 6 so it is rotatable and movable in the axial direction thereof. That is to say, the main shaft 1 is capable of sliding freely and smoothly by even weak force in the axial direction.

To the boss 20 is fixed a pulley 3 with a key 21. On a bottom portion of the housing 6 there is provided a motor 13 including a speed reducer. An output shaft of the motor 13 is coupled to the pulley 3 by a belt 17. Thus the motor 13 can rotate the main shaft 1 and the countershaft 4.

In the housing 6, ball screw 14, 14' are positioned horizontally parallel to the main shaft 1. Opposite ends of the respective ball screws 14, 14' are rotatably supported by the housing 6 by rolling bearings 22, 23 see Figure 4.

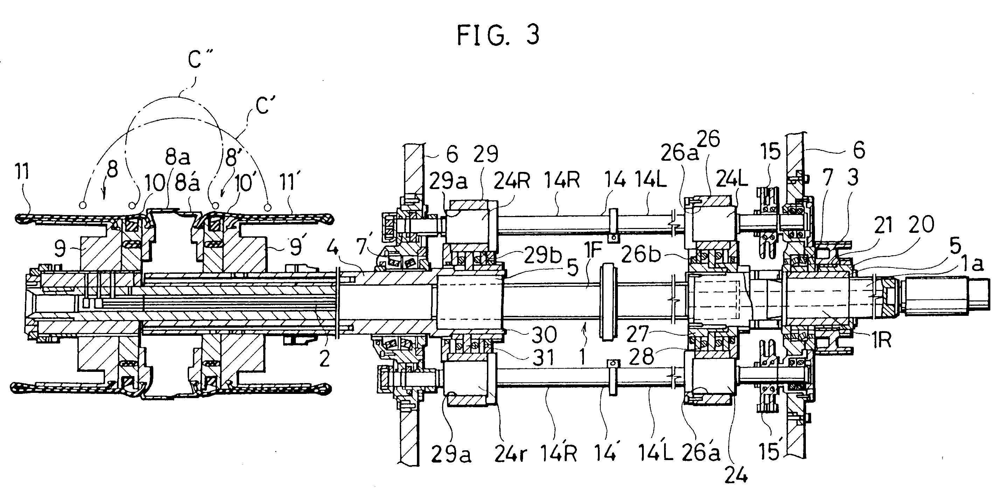

A forward half of the ball screws 14 is a right-hand thread 14R (the left half of the ball screw 14 in Figures 1, 3) and a rear half thereof is a left-hand thread 14L (the right half thereof in Figures 1,3). Similarly, a forward half of the ball screw 14' is a right-hand thread screw 14'R, and a rear half thereof is a left-hand thread 14'L. Right-hand threaded nuts 24R, 24'R are spirally fitted to the right-hand threaded screws 14R, 14'R respectively. Similarly, left-hand threaded nuts 24L, 24'L are spirally fitted to the left-hand threaded screws 14L, 14'L respectively.

On the other hand bosses 30, 27 are externally fixed to a specified portion of the countershaft 4 located inside the housing 6 and the junction portion 1c of the main shaft 1 respectively. Around the bosses 30, 28 are disposed thrust 29, 26 extending in radial directions of the main shaft 1. More specifically, the respective thrust members 29, 26 have opening 29b, 26b defined in the centre thereof. The openings 29b, 26b have radii larger than those of the bosses 30, 27 respectively. Between the inner circumferential surfaces of the openings 29b, 26b and the outer circumferential surfaces of the bosses 30, 27 are provided thrust bearings 31, 28 respectively. Due to this construction as described above, the main shaft 1 and the countershaft 4 are rotatable relative to the thrust members 29, 26 respectively, and move together with the respective thrust members 26, 29 in the shaft direction.

The thrust members 29, 26 are further provided with openings 29a, 29'a, and openings 26a, 26'a on opposite end portions thereof respectively. The opening 20a, 20'a are arranged horizontally interposing the opening 29b. Similarly, the openings 26a, 26'a are arranged horizontally interposing the opening 26b. To the openings 29a, 26a are fixed the right-hand threaded nut 24R and the left-hand threaded nut 24L respectively. To the openings 20'a 26a' are fixed the right-hand threaded nut 24'R and the left-hand threaded nut 24'L respectively. That is to say, the countershaft 4 is coupled to the right-hand threaded nuts 24R. 24'R by the thrust member 29, and moves together with the right-hand threaded nuts 24R, 24'R and the thrust member 29. On the other hand, the main shaft 1 is coupled to the left-hand threaded nuts 24L through the thrust member 26, and moves together with the left-hand threaded nuts 24L, 24'L and the thrust member 26.

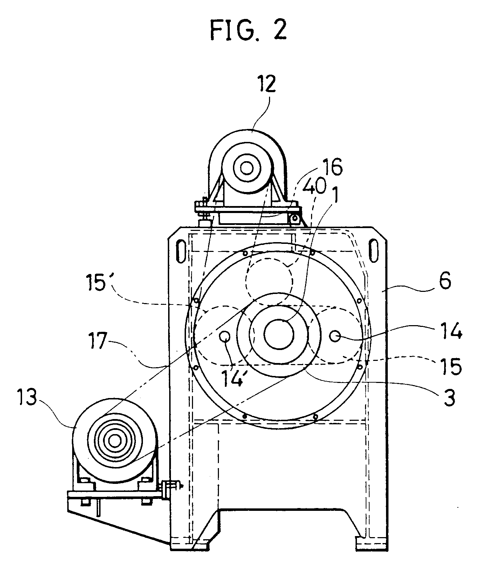

Further, sprockets 15, 15' are fixed on the circumferential surfaces of the ball screws 14, 14' at positions close to the interior side wall of the housing 6. On a top wall of the housing is mounted a motor 12 including a speed reducer (ball screw drive means) provided with a clutch 12a (switch means). A single chain 16 is engaged on output shaft of the motor 12 and the sprockets 15. 15' as shown in Figure 2. Upon engaging the clutch 12a, the driving force of the motor 12 is transmitted to the ball screw 14, 14' through the chain 16 and the sprockets 15, 15', whereby the ball screws 14, 14' may be drivingly rotated. With the clutch 12a disengaged, the ball screws 14, 14' are allowed to rotate freely even a weak force. More specifically, in this state, the sprockets are capable of rotating without any restraint. Accordingly, when a left shoulder former 8 mounted on a forward end of the main shaft 1 and a right shoulder former 8' mounted on a forward end of the countershaft 4 are moved closer to or away from each other in the axial direction thereof by a weak force, the screw nuts 24L, 24'L, and 24R, 24'R slide on the ball screws 14, 14L; through the bosses 27, 30, and the thrust members 26, 29 closer to or away from each other corresponding to the movement of the shoulder 8,8' with almost no resistance.

Indicated at 40 in Figure 2 is a tension roller pressed against the chain 16.

Next, there will be described the green tyre shaping section of the apparatus.

A circular hole (shaping air supply passage) 2 is provided in the centre of the main shaft 1, the hole extending in the axial direction of the main shaft 1. Inside the shaping air supply passage 2 is positioned a bead locking air pipe 32 for supplying air to be used to lock the beads. Further inside the shaping air supply passage 2 is positioned a right turn-up bladder air pipe 33 for supplying air to inflate a right turn-up bladder. Still further inside the shaping air supply passage 2 is positioned a left turn up bladder air pipe 34 for supplying the air to inflate a left turn-up bladder. The forward end of the right turn-up bladder air pipe 33 extends in front of that of the bead locking air pipe 32. The forward end of the left turn-up bladder air pipe 34 extends in front of that of the right turn-up bladder air pipe 33.

Further, to a forward end of the shaping air supply passage 2 in the main shaft 1 is spirally inserted an end plug 35 to form air chambers 35a, 35b, and 35c. A main shaft sleeve 36 is externally fitted to the forward end of the main shaft 1 and integrally fixed in the main shaft 1 by a key 37. The forward ends of the air pipes 32, 33, and 34 are respectively connected to the air chambers 35a, 35b, and 35c. Also, air communicating holes 2s, 2u, and 2r are defined in the main shaft 1 extending respectively in radial directions of the main shaft 1. The air communicating hole 2s is adapted to connect the shaping air supply passage 2 with the outside of the main shaft 1. The air communicating hole 2t is adapted to connect the air chamber 35c with the outside of the main shaft 1. The air communicating hole 2u is adapted to connect the air chamber 35b with the outside of the main shaft 1. The air communicating hole 2r is adapted to connect the air chamber 35c with the outside of the main shaft 1. Air communicating holes 36t, 36u, and 36r, which are in register with the air communicating holes 2t, 2u, and 2r, are in the main shaft sleeve 36 and extend in radial directions of the sleeve 36.

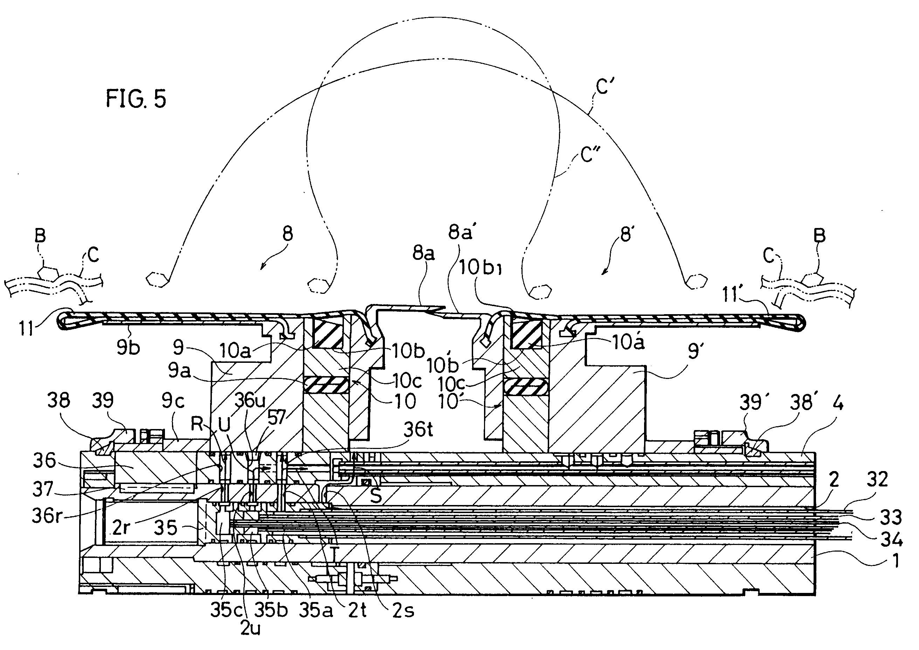

Over the entire circumferential surface of the forward end portion (the left end portion in Figure 5) of the main shaft 1 is provided a left shoulder former 8. Over the entire circumferential surface of the forward end portion of the countershaft 4 is provided a right shoulder former 8' arranged to oppose the left shoulder former 8.

The left and the right shoulder formers 8, 8' comprise support rings 9, 9' respectively axially inside the support rings 9, 9' cylinder bodies 8a, 8'a which are engageable with each other by being moved closer to each other. These cylinder bodies 8a, 8'a are adapted to form a cylindrical support surface having the required former width for the carcass assembly operation, and to be able to have a reduced former width when required by engaging with each other.

Hereafter, the description is to be made of only the left shoulder former 8. The support ring 9 is externally fitted to the main shaft sleeve 36. A bottom plate 9c of the support ring 9 is fixed to the main shaft sleeve 36 by a key 38. Further, a ring nut 39 is a screw fitted to an end 9c of the bottom plate 9, whereby the support ring 9 is integrally fixed to the forward end of the main shaft 1.

On the circumferential surface of the support ring 9 is formed a groove which opens radially outwards (upward in Figure 5).

An annular rubber bag 9a is accommodated in this groove. Further outward of the rubber bag 9a, a plurality of bead locking segments 10c are mounted aligned in the circumferential direction of the apparatus. These bead locking segments 10c collectively form an annular body. Each bead locking segment 10c is provided with a fitting portion 10b open radially outward. The fitting portions 10b collectively form an annular groove in which a rubber solid band 10a is fitted. The rubber solid band 10a, the bead locking segments 10c, and the rubber bag 9a constitute bead locking means 10. When supplied with compressed air, the rubber bag 9a is inflated to push the bead locking segments 10c radially outwards. In this way, the overall bead locking means is made to be capable of expanding radially outwards.

Means for pushing the respective bead locking segments 10c radially outwards is not limited to the rubber bag described above. It is, for example, possible to drivingly push the respectively bead locking segments 10c radially outwards by a link mechanism. Specifically, the bead locking means is provided with an air cylinder actuatable in an axial direction of the left and the right shoulder former 8, 8'. A piston provided in the air cylinder is coupled to the bead locking segments 10c respectively through links. An axial movement of the piston is converted to radially outward movements of the respective bead locking segments 10c through the respective links. Accordingly, the respective bead locking segments can be driven simultaneously.

Radially outward of the bead locking segments 10c is disposed a turn-up bladder 11. An inner end and an outer end of the turn-up bladder 11 are respectively fixed to specified positions on an outer circumferential surface of the support ring 9. The turn-up bladder 10 is sealed, so that the interior thereof is completely separated from the exterior thereof. Further, at an outer side face of the support ring 9 (left side face thereof in Figure 5) with respect to an axial direction thereof is provided a support plate 9b for supporting the turn-up bladder 11 from the radially inward directions, the support plate 9b extending along the axial direction.

With this construction, the shaping air sent through the shaping air supply passage 2 defined in the main shaft 1 and the bead locking air pipe 32 is supplied to the inside of the carcass ply c to be described in detail below in the following manner. The shaping air passes through the air communicating hole 2s defined in the main shaft 1, and then through a clearance between the main shaft sleeve 36 and the countershaft 4 as shown by arrow S in Figure 5. Through a longitudinal hole formed between the cylinder bodies 8, 8', the shaping air is consequently supplied to the inside of the carcass ply C disposed outside of the cylinder bodies 8, 8'.

Further, the air sent through the bead locking air pipe 32 is supplied from the air chamber 35a defined in the end plug 35 through the air communicating holes 2t, 36t to the inside of the rubber bag 9a as shown by an arrow T in Figure 5, and thereby inflating the rubber bag 9a.

Moreover, the air sent through the turn-up bladder air pipes 33 is supplied from the air chambers 35b through the air communicating holes 2u,36u to the inside of the right turn-up bladder 11' as shown by an arrow U in Figure 5, and thereby inflating the right turn-up bladder 11'. Similarly, the air sent through the turn-up bladder air pipes 34 is supplied from the air chambers 35c through the air communicating holes 2r,36r to the inside of the left turn-up bladder 11 as shown by an arrow R in Figure 5, and thereby inflating the left turn-up bladder 11.

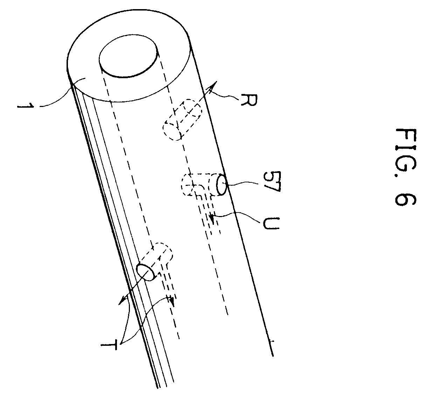

Indicated at 57 in Figures 5 and 6 is a plug.

The respective air communicating paths described hereinbelow can be summarised as follows:
a) Shaping air:
   shaping air supply passage 2 --> air communicating hole 2s --> an arrow S --> inside of formers.
b) bead locking air:
   bead locking air pipe 32 --> air chamber 35--> air communicating hole 2t --> air communication hole 36t --> left or right bead locking means.
c) right turn-up bladder air:
   turn-up bladder air pipe 33 --> air chamber 35b --> air communicating hole 2u --> air communicating hole 36u --> inside of right turn-up bladder 11'.
d) left turn-up bladder air:
   turn-up bladder air pipe 34 --> air chamber 35c --> air communicating hole 2r --> air communicating hole 36r --> inside of left turn-up bladder 11.

The right shoulder former 8' is identical to the left shoulder former 8 in its construction and operation except that the right shoulder former 8' is fixed to the countershaft 4 symmetrically to the left shoulder former 8 with respect to a longitudinal plane located midway between the right and left shoulder formers 8,8'. Accordingly, identical parts are designated dashed with the same numerals, and the description thereof is not repeated.

Next, there will be described a green tyre building process employed in the above constructed apparatus.
(a) At the stage when a preceding tyre building operation is completed, the left and right shoulder formers 8,8' are located close to each other as shown in Figure 5. Accordingly, the clutch 12a is engaged so as to bring the ball screws 14,14' into the driving state. The motor 12 is actuated to rotate the ball screws 14,14' through the chain 16, and the sprockets 16,16', whereby the thrust members 26,29 are respectively moved closer to each other. The main shaft 1 and the countershaft 4 fixed respectively to the thrust members 26 and 29 are moved in the axial direction thereof due to movements of the thrust members 26,29. This in turn causes the left and right shoulder formers 8,8' respectively fixed to the main shaft 1 and the countershaft 4 to move away from each other in the axial direction. Upon the left and right shoulder formers 8,8' reaching their respective fully open positions defining therebetween the width necessary for building a green tyre, the motor 12 is stopped.
(b) A band fabricated in advance by a band forming apparatus, i.e. a cylindrical carcass C without a bead is positioned on the rigid cylindrical surface formed by the left and right shoulder formers 8,8' both now in their respective fully open positions. It should be noted that the procedure for forming the carcass C is not limited in the present invention. Accordingly, the carcass C may be formed by adhering carcass components onto the cylindrical surface one over another.
(c) Left and right beads B as shown in Figure 5, held by unillustrated left and right bead setters respectively, are moved into respective locking positions right outside the bead locking segments 10c,10'c on the left and right shoulder formers 8,8' and are stopped in position. Upon the beads B stopping the clutch 12a of the motor 12 is disengaged, which in turn brings the ball screws 14,14' into their idle freely rotatable states. Thereby, the thrust members 26,29, the main shaft 1, the countershaft 4, and the left and right shoulder formers 8,8' are such that they are capable of moving freely in the axial direction under the influence of even a weak force.
(d) After the lapse of a predetermined period of time, air is supplied to the rubber bags 9a,9'a through the bead locking air pipe 32 within the main shaft 1, see arrow T. Thus the rubber bag 9a is inflated to push the bead locking segments 10c,10'c radially outwards. These bead locking segments 10c,10'c project radially outwards pushing the carcass C in a similar manner so as to completely hold the left and right beads B on the carcass C as shown by a phantom line in Figure 5. In this way, the bead locking operation is completed, and simultaneously the left and right hand bead setters are returned to standby positions thereof.
   When the beads B are to be locked, the carcass C is lifted by the radially outward projection of the bead locking segments 10c,10'c. However, since the clutch 12a of the motor 12 is disengaged and the screws in use are ball screws, the main shaft 1 and the countershaft 4 are slidable in the axial direction thereof on the ball spline 5. Further, the main shaft 1 and the housing 6 are slidable in the axial direction of the main shaft 1 through another ball spline 5. Accordingly, the left and right shoulder formers 8,8' are slightly moved in such directions as to be closer to each other in a natural manner in the axial direction of the main shaft 1 and the countershaft 4 with almost no resistance, following the radially outwards expansion of the carcass C. Therefore, the carcass C is not subjected to unnaturally strong force.
(e) A tread/belt assembly is held by an unillustrated belt transferring apparatus. The belt transferring apparatus is advanced to a position outside the centre portion between the left and right shoulder formers 8,8'. The belt transferring apparatus is stopped and waits in this standby position.
(f) After a lapse of a predetermined period of time, shaping air is supplied to the inside of the carcass C positioned between the left and right shoulder formers 8,8' through the shaping air supply passage 2 defined in the main shaft 1 with the clutch 12a still disengaged. Upon receipt of the shaping air from inside, the carcass C starts inflating radially outwards. In synchronism with the start of supply of the shaping air, the left and right shoulder former 8,8' supporting the opposite sides of the carcass C through the beads B are pulled and moved in such directions as to be uniformly closer to each other only by the tension due to inflation of the carcass C with almost no resistance.
(g) When the carcass C is shaped into the form represented by C' in Figure 5 only by the tension due to expansion of the carcass C, the clutch 12a of the motor 12 is engaged, whereby the ball screws 14,14' are drivingly rotated. This causes the left and right shoulder formers 8,8' to move further closer to each other, and continues a forcible shaping of the carcass C by driving the motor. Consequently, the left and right shoulder formers 8,8' are moved to predetermined positions shown by a solid line in Figure 5. In this state, the carcass C is inflated into the toroidal form represented by C'' in Figure 5 by the shaping air being continually supplied to the inside thereof, completing the shaping operation.
   As means for setting the engagement timing of the clutch 12a, for example, a limit switch may be provided in a specified position in the path of the right shoulder former 8'. The clutch 12a may be arranged to be disengaged upon the limit switch being turned on.
(h) An upper end, i.e. a centre portion, of the carcass C shaped into a toroidal form as described above is in pressing contact with the tread/belt assembly held by the belt transferring apparatus. At this point, the belt transferring apparatus is returned to its standby position. An unillustrated tread stitcher is moved so as to press the tread onto the carcass C to consolidate the assembly.
(j) Next, air is supplied to the inside of the left and right turn-up bladders 11,11' through the turn-up bladder air pipes 33,34 within the main shaft 1 respectively, see arrows R and T. Thereby, the bladders 11,11' are inflated. Carcass portions located outside the respective beads B, namely the ply overhanging portions and the side walls, are turned up outwardly around the bead B by inflation of the bladders 11,11'. Further, unillustrated left and right pushers are moved to their respective operative position so as to press the bladders 11,11' from outside, thereby the ply overhanging portions and the side wall portions are pressingly adhered to the carcass C.
(k) After the pushers are withdrawn from the respective operative positions to complete the tyre building operation, an unillustrated green tyre extracting apparatus is moved forward up to a position corresponding to the left and right shoulder formers 8,8'. Upon completion of the built tyre extracting operation, the green tyre extracting apparatus is withdrawn and transported to an unillustrated rack.

As described above, the green tyre building apparatus of the invention comprises the ball screw as mechanism for sliding the left and right shoulder formers 8,8' relative to each other in the axial direction of the formers. Further, the main shaft 1 and the countershaft 4 are coupled to each other through a ball spline 5. Similarly, the main shaft 1 and the housing 6 are coupled to each other through another ball spline 5. Accordingly, frictional resistance between the screw and the nut, friction caused by rotation of the motor, and frictional resistance of bearings can be drastically reduced. As a result, in the bead locking operation, the left and right shoulder formers 8,8', spontaneously follow radially outward expansion of the carcass C, move uniformly and freely towards each other in the axial direction thereof. Therefore, unnaturally strong force is not applied to the carcass ply cords, preventing the lengths of the carcass ply cords between the beads B from becoming variable. This contributes to an improvement in tyre uniformity. Further, in the shaping operation, the sliding of the left and right shoulder formers 8,8' in the axial direction thereof and the supply of the shaping air start quite synchronously. The carcass ply cords are thus subject to constant tension from the opposite sides thereof with respect to the axial direction. This results in uniform length of the carcass ply cords between the two beads and also uniform length of the turned up ply, reducing variance in the circumferential length of the green tyre and preventing an occurrence of flapping of the ply. Consequently, uniformity of the tyre, or tyre quality can be greatly improved.

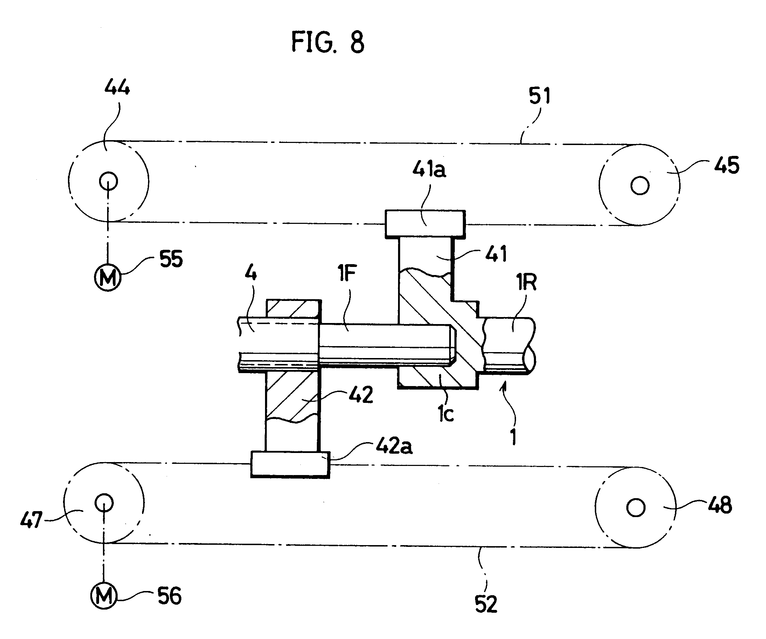

It should be noted that the present invention is not limited to the foregoing embodiment, but can also be embodied as follows:
(1) A specific construction of drive means for moving the left and right formers (forming means) 8,8' is not limited in the present invention. Besides the use of the ball screws 14,14' as in the foregoing embodiment, various other means are applicable as drive means.
   An example of the drive means is shown in Figure 8. A forward main shaft 1F and a rearward main shaft 1R are connected to each other through a connecting portion 1c. A thrust member 42 extends upward from the connecting portion 1c while another thrust member 44 is fixed to an end of the countershaft 4 extending downward. On the other hand, pairs of sprockets 44,45 and 47,48 are disposed in parallel to the main shaft 1 spaced from the main shaft 1. Each of the sprocket pairs is disposed forward and rearward along the axial direction of the main shaft 1 with the sprockets spaced from each other. The sprockets 44,47 are respectively coupled to motors (sprocket driving means) 55,56, each provided with a clutch (switch means). Upon engagement of the clutch, the sprockets 44,47 are drivingly rotated by the motors 55,56. On one side of the main shaft 1, a chain 51 is wound on the sprockets 44,45. Similarly, on the other side of the main shaft 1, a chain 52 is wound on the sprockets 47,48. An end portion 41a of the thrust member5 41 and an end portion 42a of the thrust member 42 are respectively fixed to the chain 51 and the chain 52.
   With the above construction, the sprockets 44,47 are drivingly rotated by the motors 55,56 so that the chain 51 and thrust member 41, and the chain 52 and the thrust member 42 can move integrally. thereby, it is made possible to move the main shaft 1 and the countershaft 4 in the axial direction thereof relative to each other.
(2) In the foregoing embodiment, the clutch 12a is kept disengaged not only during the bead locking operation, but also from the start of the carcass shaping operation to a predetermined stage thereof so as to keep the left and right shoulder formers 8,8' in respective idle, movable states. However, in the present invention, it suffices to keep the formers 8,8' in the idle, movable state at least during the bead locking operation. If so, the left and right formers 8,8' move freely in such directions as to be closer to each other uniformly, spontaneously following the radially outward expansion of the carcass C during the bead locking operation. This prevents unnaturally strong force from being applied to the carcass C and also prevents the lengths of the carcass play cords between the beads B from becoming variable. Accordingly, uniformity of the built tyre can be improved. If kept in the idle, movable state from the start of the shaping operation to the predetermined stage thereof, the left and right shoulder formers 8,8' are movable toward each other spontaneously on inflation of the carcass by the shaping air. Accordingly, the sliding of the left and right shoulder formers 8,8' in the axial direction thereof and the supply of the shaping air can be automatically started quite synchronously. In addition, the carcass ply cords are constantly subjected to the uniform tension from the opposite sides thereof with respect to the axial direction. This results in uniform length of the carcass ply cords between the two beads and also uniform length of the turned up ply, reducing variance in circumferential length of the built green tyre and preventing an occurrence of flapping of the ply. Consequently, uniformity of the tyre can be greatly improved, thereby enabling the building of a more satisfactory green tyre.
(3) A specific construction of green tyre building means is not limited in the present invention. Various means can be applicable as building means regardless of provision of a bladder.

### INDUSTRIAL EXPLOITABILITY

As described above, the present invention is very useful as a green tyre building apparatus. Left and right shoulder formers are desirably switchable between a drivingly movable state and an idle, movable state. In the latter state, the formers are moved closer to each other spontaneously on expansion of the carcass in the bead locking operation and/or the inflation of the carcass by the shaping air supplied to the inside. Accordingly, it can be prevented that unnaturally strong force is exerted on the carcass cords, and that the lengths of the carcass cords between the beads become variable. This contributes to an improvement in tyre uniformity. Further, in the carcass shaping operation, the sliding of the left and right building means 8,8' in the axial direction thereof and the supply of the shaping air can be started automatically synchronously. In addition, the carcass ply cords are constantly subjected to the tension from the opposite sides thereof with respect to the axial direction. This results in uniform length of the carcass ply cords between the two beads and also uniform length of the turned up ply, reducing variance in circumferential length of the built green tyre and preventing an occurrence of flapping of the ply. Consequently, uniformity of the tyre, or tyre quality can be greatly improved.

## Claims

1. A method for building a green tyre on a green tyre building means including left and right shoulder formers (8,8') arranged in an axial direction for supporting a cylindrical carcass (C), the shoulder formers (8,8') each being provided with a bead locking means (10c) and being forcibly movable in the axial direction by a driving means, the method comprising forming a cylindrical carcass (C) on the green tyre building means, setting left and right bead rings (B) at specified positions radially outside the respective bead locking means (10c) of the left and right shoulder formers (8,8'), actuating the bead locking means (10c) to lock the bead rings (B) on the specified positions of the cylindrical carcass (C), actuating the driving means to forcibly move the left and right shoulder formers (8,8') towards each other in shaping of the cylindrical carcass (C) into a toroidal form, turning up opposite side portions of the carcass (C) around the respective bead rings (B), and adhering a breaker/tread assembly onto an outer circumferential surface of the carcass (C), the method being characterised by selectively setting the driving means in an idle state so that the left and right shoulder formers (8,8') are freely movable towards each other in response to additional tension of the carcass caused when the bead locking means (10c) is actuated to lock the bead rings (B).

2. A method as defined in claim 1, characterised in that the driving means is actuated after the bead rings (B) are locked on the cylindrical carcass (C) but before shaping.

3. A method as defined in claim 1, characterised by further comprising supplying shaping air into a closed space defined by the left and right shoulder formers (8,8') and the carcass (C) when the driving means is in the idle state after the bead rings (B) are locked on the cylindrical carcass (C), wherein the driving means is actuated after the carcass (C) is inflated to a predetermined stage.

4. An apparatus for building a green tyre comprising a housing (6), a main shaft (1) rotatably supported by the housing (6), a countershaft (4) disposed coaxially with the main shaft (1), the countershaft (4) being movable relative the main shaft (1) in an axial direction thereof and rotatable integrally with the main shaft (1), left and right shoulder formers (8,8') mounted respectively on the main shaft (1) and the countershaft (4) and adapted for supporting a carcass (C), each of the shoulder formers (8,8') having radially expandable bead locking means (10c), drive means for moving the main shaft (1) and the countershaft (4) relative to each other in axial directions thereof, the apparatus being characterised in that the drive means has a driving state of moving the main shaft (1) and the countershaft (4) in axial directions so that the left and right shoulder formers (8,8') forcibly move to or away from each other and a suspending state of allowing the countershaft (4) to freely move relative to the main shaft (1) so that the left and right shoulder formers (8,8') move to each other due to additional tension of the carcass (C) caused by the radially expandable bead locking means (10c), and switch means is further provided for selectively setting the drive means in either of the driving state or the suspending state, the switch means setting the drive means in the suspending state when the radially expandable bead locking means (10c) is actuated.

5. An apparatus as defined in claim 4 characterised in that the countershaft (4) includes a sleeve externally fitted to the main shaft (1) through a ball spline.

6. An apparatus as defined in claims 4 or 5 characterised in that the drive means comprises a ball screw (14,14') rotatably disposed in parallel to the main shaft (1) and the countershaft (4); ball screw driving means for drivingly rotating the ball screw; a pair of nuts (24R,24R',24L,24L') spirally fitted to the ball screws; a thrust member (29) for coupling one of the nuts to the main shaft, and another thrust member (26) for coupling the other nut to the countershaft.

7. An apparatus as defined in claim 4 or 5 characterised in that the drive means includes first and second pairs of sprockets disposed forward and rearward relative to each other in a direction parallel to the main shaft (1) and the countershaft (4), each pair being disposed on an opposite side of the main shaft (1) and the countershaft (4); sprocket driving means for drivingly rotating the pairs of sprockets; chains wound on the first and second pairs of sprockets respectively; a thrust member for coupling the first chain and the main shaft, and another thrust member for coupling the second chain and the countershaft.

## Patentansprüche

1. Ein Verfahren zum Aufbauen eines Rohreifens auf einem Rohreifenaufbaumittel mit linken und rechten Schulterformern (8, 8'), die in einer axialen Richtung zum Stützen einer zylindrischen Karkasse (C) angeordnet sind, wobei die Schulterformer (8, 8') jeweils mit einem Wulstfestsetzmittel (10c) versehen und unter zwang in der axialen Richtung von einem Antriebsmittel bewegbar sind und das Verfahren die Schritte umfaßt, daß eine zylindrische Karkasse (C) auf dem Rohreifenaufbaumittel gebildet wird, daß linke und rechte Wulstringe (B) an spezifizierte Positionen radial außerhalb der jeweiligen Wulstfestsetzmittel (10c) der linken und rechten Schulterformer (8, 8') gesetzt werden, daß die Wulstfestsetzmittel (10c) betätigt werden, um die Wulstringe (B) in den spezifizierten Positionen der zylindrischen Karkasse (C) festzusetzen, daß die Antriebsmittel betätigt werden, um die linken und rechten Schulterformer (8, 8') beim Formen der zylindrischen Karkasse (C) zu einer torischen Form unter Zwang aufeinander zu zu bewegen, daß gegenüberliegende Seitenabschnitte der Karkasse (C) um die jeweiligen Wulstringe (B) herum umgeschlagen werden, und daß eine Breaker/Laufflächenanordnung auf einer äußeren Umfangsoberfläche der Karkasse (C) haftend angebracht wird, wobei das Verfahren dadurch gekennzeichnet ist, daß die Antriebsmittel selektiv in einen Leerlaufzustand gesetzt werden, so daß die linken und rechten Schulterformer (8, 8') in Abhängigkeit von einer zusätzlichen Spannung der Karkasse, die verursacht wird, wenn das Wulstfestsetzmittel (10c) betätigt wird, um die Wulstringe (B) festzusetzen, frei aufeinander zu bewegbar sind.

2. Ein Verfahren wie in Anspruch 1 definiert,
dadurch gekennzeichnet,
daß das Antriebsmittel betätigt wird, nachdem die Wulstringe (B) auf der zylindrischen Karkasse (C) festgesetzt worden sind, jedoch vor der Formgebung.

3. Ein Verfahren wie in Anspruch 1 definiert,
weiter dadurch gekennzeichnet,
daß Formgebungsluft einem geschlossenen Raum zugeführt wird, der durch die linken und rechten Schulterformer (8, 8') und die Karkasse (C) definiert ist, wenn sich das Antriebsmittel im Leerlaufzustand befindet, nachdem die Wulstringe (B) auf der zylindrischen Karkasse (C) festgesetzt worden sind, wobei das Antriebsmittel betätigt wird, nachdem die Karkasse (C) bis zu einem vorbestimmten Stadium aufgepumpt worden ist.

4. Eine Vorrichtung zum Aufbauen eines Rohreifens mit einem Gehäuse (6), einer Hauptwelle (1), die drehbar von dem Gehäuse (6) gestützt ist, einer Gegenwelle (4), die koaxial zur Hauptwelle (1) angeordnet ist, wobei die Gegenwelle (4) relativ zur Hauptwelle (1) in einer axialen Richtung davon bewegbar und integral mit der Hauptwelle (1) drehbar ist, linken und rechten Schulterformern (8, 8'), die jeweils auf der Hauptwelle (1) und der Gegenwelle (4) angebracht und ausgelegt sind, eine Karkasse (C) zu stützen, wobei jeder der Schulterformer (8, 8') radial erweiterbare wulstfestsetzmittel (10c) aufweist, und Antriebsmitteln zum Bewegen der Hauptwelle (1) und der Gegenwelle (4) relativ zueinander in deren axialen Richtungen, wobei die Vorrichtung dadurch gekennzeichnet ist, daß das Antriebsmittel einen Antriebszustand, in welchem es die Hauptwelle (1) und die Gegenwelle (4) in axialen Richtungen bewegt, so daß die linken und rechten Schulterformer (8, 8') sich unter Zwang aufeinander zu oder voneinander weg bewegen, und einen aussetzenden Zustand aufweist, in welchem es der Gegenwelle (4) gestattet, sich frei relativ zur Hauptwelle (1) zu bewegen, so daß die linken und rechten Schulterformer (8, 8') sich aufgrund einer zusätzlichen Spannung der Karkasse (C), die durch die radial erweiterbaren Wulstfestsetzmittel (10c) verursacht wird, aufeinander zu bewegen, und daß weiter ein Schaltmittel vorgesehen ist, um selektiv die Antriebsmittel in entweder den Antriebszustand oder den aussetzenden Zustand zu setzen, wobei das Schaltmittel das Antriebsmittel in den aussetzenden Zustand setzt, wenn das radial erweiterbare Wulstfestsetzmittel (10c) betätigt wird.

5. Eine Vorrichtung wie in Anspruch 4 definiert,
dadurch gekennzeichnet,
daß die Gegenwelle (4) eine Hülse umfaßt, die außen an der Hauptwelle (1) durch eine Kugelkeilnut angebracht ist.

6. Eine Vorrichtung wie in den Ansprüchen 4 oder 5 definiert,
dadurch gekennzeichnet,
daß das Antriebsmittel eine Kugelschraube (14, 14'), die drehbar parallel zur Hauptwelle (1) und zur Gegenwelle (4) angeordnet ist, Kugelschraubenantriebsmittel, die antreibend die Kugelschraube drehen, ein Paar von Muttern (24R, 24R', 24L, 24L'), die schraubenartig an den Kugelschrauben angebracht sind, ein Druckglied (29), welches eine der Muttern an die Hauptwelle koppelt, und ein weiteres Druckglied (26) aufweist, welches die andere Mutter an die Gegenwelle koppelt.

7. Eine Vorrichtung wie in Anspruch 4 oder 5 definiert,
dadurch gekennzeichnet,
daß das Antriebsmittel erste und zweite Paare von Zahnrollen, die vorn und hinten relativ zueinander in einer Richtung parallel zu der Hauptwelle (1) und der Gegenwelle (4) angeordnet sind, wobei jedes Paar auf einer gegenüberliegenden Seite der Hauptwelle (1) und der Gegenwelle (4) angeordnet ist, Zahnrollenantriebsmittel, welche die Paare von Zahnrollen antreibend drehen, Ketten, die jeweils auf die ersten und zweiten Paare von Zahnrollen gewickelt sind, ein Druckglied, welches die erste Kette und die Hauptwelle koppelt, und ein weiteres Druckglied umfaßt, welches die zweite Kette und die Gegenwelle koppelt.

## Revendications

1. Procedé de confection d'un pneumatique non vulcanisé sur un dispositif de confection de pneumatique non vulcanisé, comprenant des organes formateurs d'épaulements gauche et droit (8, 8') placés en direction axiale et destinés à supporter une carcasse cylindrique (C), les organes formateurs d'épaulements (8, 8') ayant chacun un dispositif (10c) de blocage de talon et pouvant être déplacés de manière forcée dans la direction axiale du dispositif d'entraînement, le procédé comprenant la formation d'une carcasse cylindrique (C) sur le dispositif de confection de pneumatique non vulcanisé, le montage de tringles (B) gauche et droite à des positions spécifiées radialement à l'extérieur du dispositif respectif de blocage de talon (10c) des organes formateurs d'épaulements gauche et droit (8, 8'), la commande des dispositifs de blocage de talon (10c) afin que les tringles (B) soient bloquées en position spécifiée sur la carcasse cylindrique (C), la commande du dispositif d'entraînement afin qu'il déplace à force les organes formateurs d'épaulements gauche et droit (8, 8') l'un vers l'autre lors de la mise en forme de la carcasse cylindrique (C) à une configuration toroïdale, le pliage des parties latérales opposées de la carcasse (C) autour des anneaux respectifs de talon (B), et l'adhérence d'un ensemble nappe sommet-bande de roulement à la surface circonférentielle externe de la carcasse (C), le procédé étant caractérisé par la mise sélective du dispositif d'entraînement à un état libre afin que les organes formateurs d'épaulements gauche et droit (8, 8') puissent se rapprocher librement sous l'action de la tension supplémentaire de la carcasse provoquée lorsque les dispositifs de blocage de talon (10c) sont commandés afin qu'ils bloquent les tringles (B).

2. Procédé selon la revendication 1, caractérisé en ce que le dispositif d'entraînement est commandé après que les tringles (B) ont été bloquées sur la carcasse cylindrique (C) mais avant la mise en forme.

3. Procédé selon la revendication 1, caractérisé en ce qu'il comprend en outre la transmission d'air de mise en forme dans un espace fermé délimité par les organes formateurs d'épaulements gauche et droit (8, 8') et la carcasse (C) lorsque le dispositif d'entraînement est à un état libre après que les tringles (B) ont été bloquées sur la carcasse cylindrique (C), le dispositif d'entraînement étant commandé après que la carcasse (C) a été gonflée à un état prédéterminé.

4. Appareil de confection d'un pneumatique non vulcanisé, comprenant un boîtier (6), un arbre principal (1) supporté par le boîtier (6) afin qu'il puisse tourner, un arbre auxiliaire (4) disposé coaxialement dans l'arbre principal (1), l'arbre auxiliaire (4) étant mobile par rapport à l'arbre principal (1) dans sa direction axiale et pouvant tourner avec l'arbre principal (1), des organes formateurs d'épaulements gauche et droit (8, 8') montés respectivement sur l'arbre principal (1) et l'arbre auxiliaire (4) et destinés à supporter une carcasse (C), chacun des organes formateurs d'épaulements (8, 8') ayant un dispositif (10c) de blocage de talon qui peut se dilater radialement, et un dispositif d'entraînement destiné à déplacer l'arbre principal (1) et l'arbre auxiliaire (4) l'un par rapport à l'autre en direction axiale, l'appareil étant caractérisé en ce que le dispositif d'entraînement a un état d'entraînement par déplacement de l'arbre principal (1) et de l'arbre auxiliaire (4) en direction axiale afin que les organes formateurs d'épaulements gauche et droit (8, 8') se rapprochent ou s'écartent à force, et un état de suspension permettant à l'arbre auxiliaire (4) de se déplacer librement par rapport à l'arbre principal (1) afin que les organes formateurs d'épaulements gauche et droit (8, 8') se déplacent l'un vers l'autre du fait de la tension supplémentaire de la carcasse (C) provoquée par les dispositifs (10c) de blocage de talon qui sont dilatables radialement, et un dispositif de commutation est en outre incorporé afin qu'il mette sélectivement le dispositif d'entraînement dans l'état d'entraînement ou l'état de suspension, le dispositif de commutation plaçant les dispositifs d'entraînement à l'état de suspension lorsque les dispositifs (10c) de blocage de talon dilatables radialement sont commandés.

5. Appareil selon la revendication 4, caractérisé en ce que l'arbre auxiliaire (4) comporte un manchon monté à l'extérieur de l'arbre principal (1) par l'intermédiaire d'un organe cannelé à billes.

6. Appareil selon la revendication 4 ou 5, caractérisé en ce que le dispositif d'entraînement comporte une vis à billes (14, 14') disposée afin qu'elle puisse tourner parallèlement à l'arbre principal (1) et à l'arbre auxiliaire (4), un dispositif d'entraînement en rotation de la vis à billes, deux écrous (24R, 24R', 24L, 24L') montés de façon spiralée sur les vis à billes, un organe (29) de butée destiné à coupler l'un des écrous à l'arbre principal, et un autre organe de butée (26) destiné à coupler l'autre écrou à l'arbre auxiliaire.

7. Appareil selon la revendication 4 ou 5, caractérisé en ce que le dispositif d'entraînement comprend une première et une seconde paire de pignons placés en avant et en arrière en direction parallèle à l'arbre principal (1) et à l'arbre auxiliaire (4) les uns par rapport aux autres, chaque paire étant disposée d'un côté opposé de l'arbre principal (1) et de l'arbre auxiliaire (4), un dispositif d'entraînement en rotation des paires de pignons, des chaînes passant sur la première et la seconde paire de pignons respectivement, un organe de butée destiné à coupler la première chaîne à l'arbre principal, et un autre organe de butée destiné à coupler la seconde chaîne à l'arbre auxiliaire.
